# EUROPÄISCHE PATENTANMELDUNG

(11) **EP 4 556 549 A1**
(43) Veröffentlichungstag der Anmeldung: **21.05.2025**
(21) Anmeldenummer: 23211017.1
(22) Anmeldetag: 20.11.2023
(51) Int. Cl.: C10L 5/36, C10L 5/44, C10L 9/08

(54) **REDUKTIONSMITTEL IN PULVERFORM, DESSEN VERWENDUNG UND VERFAHREN ZUR HERSTELLUNG DIESES REDUKTIONSMITTELS AUS BIOMASSE**

(71) Anmelder: voestalpine Stahl Donawitz GmbH, 8700 Leoben-Donawitz (AT)
(72) Erfinder: Kienzl, Norbert, 8010 Graz (AT); Deutsch, Richard, 8043 Graz (AT); Stocker, Hugo, 8700 Leoben (AT); Schuster, Elmar, 8700 Leoben (AT); Habermann, Arno, 8700 Leoben (AT); Marout, Alexander, 8700 Leoben (AT)
(74) Vertreter: Jell, Friedrich

(57) **Zusammenfassung**

Es wird ein Reduktionsmittel in Pulverform, dessen Verwendung und ein Verfahren zur Herstellung dieses Reduktionsmittels aus Biomasse gezeigt. Das Verfahren zur Herstellung dieses Reduktionsmittels umfasst die folgenden Schritte in der genannten Reihenfolge: Verdichten der Biomasse bei einem Druck ≥ 150 MPa, Pyrolysieren der verdichteten Biomasse bei einer Pyrolysetemperatur ≥ 280 °C und Zerkleinern der pyrolysierten Biomasse zu Pulver.

## Beschreibung

Die Erfindung betrifft ein Reduktionsmittel in Pulverform, dessen Verwendung und ein Verfahren zur Herstellung dieses Reduktionsmittels aus Biomasse.

Die Stahlindustrie gilt als eine der energieintensiven Branchen. Dabei wird im Bereich des Hochofens die meiste Energie benötigt. Die Möglichkeiten, diesen Energiebedarf aus traditionellen Energieformen und damit CO₂-Emissionen zu reduzieren, sind weitgehend erschöpft.

Eine Reduktion von CO₂-Emissionen kann langfristig durch Einsatz von Wasserstoff oder elektrischer Energie anstelle von Kohlenstoff ermöglicht werden.

Kurz- und mittelfristig und eventuell auch in der Übergangsphase kann der Einsatz von CO₂-neutralen Energieträgern als Ersatz von fossiler Steinkohle und Koks im Hochofen vorstellbar sein, um damit CO₂-Emissionen weiter zu reduzieren. Als solche gelten erneuerbare Biomasseprodukte, so wie Holz beispielsweise in Form von Alt- oder Restholz etc., etwa aus Industrie und aus land- und forstwirtschaftlichen Erzeugnissen, etc..

Es ist bekannt, dass durch eine thermochemische Behandlung einer Biomasse deren chemische und physikalische Eigenschaften verändert werden können. Diese Behandlung entzieht der Biomasse beispielsweise Wasser, Sauerstoff und organische Substanzen und erhöht damit die gravimetrische Energiedichte auf mit Kohle vergleichbare Werte.

Aus der US 2014/0306386 A1 ist ein Verfahren bekannt, bei welchem Holz auf < 10 % Feuchtigkeitsgehalt getrocknet, bei 150 °C wärmebehandelt und größensortiert direkt von oben in den Hochofen eingebracht wird.

Aus der WO 2018/229720 A1 ist ein Prozess zur Behandlung von kohlenstoffhaltigem Abfall bekannt, bei welchem der Abfall zunächst bei > 70 °C getrocknet und im Anschluss bei 200 bis 320 °C geröstet wird. Nach dem Mahlen entstehen Partikel mit einer Größe < 10 µm, welche zumindest 4 % der in den Hochofen eingeblasenen Feststoffe umfassen.

Aus der US 2018/0179448 A1 ist ein weiteres Verfahren bekannt, bei dem mittels Vorbehandlung und Verkohlung im Temperaturbereich von ungefähr 350 - 750 °C ein biogenes Koksersatzprodukt für den Einsatz im Hochofen hergestellt wird. Optional wird bei der Vorbehandlung auch eine Verdichtung und/oder Zerkleinerung angeführt, um spezielle Größen und Formen zu erreichen. Nach der Pyrolyse kann das Material zur Stahlerzeugung verwendet werden.

Dem bekannten Stand der Technik an Reduktionsmitteln aus Biomasse sind Probleme bei der Eintragung mit bestehenden Förderanlagen bekannt, was den Ersatz von Kohle, insbesondere Steinkohle, einschränkt. Weitere Gründe, die gegen solch eine Verwendung sprechen, sind deren geringe Dichte und der daraus resultierende geringe volumetrische Heizwert.

Die Aufgabe der vorliegenden Erfindung ist es, ein Verfahren zu schaffen, mit welchem aus Biomasse ein Reduktionsmittel mit vergleichbarer gravimetrischer und volumetrischer Energiedichte und vergleichbarer Förderbarkeit, wie diese beispielsweise von pulverisierter Steinkohle bekannt ist, hergestellt werden kann.

Die Aufgabe wird mit einem Verfahren mit den Merkmalen des Anspruchs 1 gelöst.

Erfindungsgemäß werden beim Verfahren zur Herstellung des Reduktionsmittels aus Biomasse die folgenden Verfahrensschritte in der genannten Reihenfolge durchgeführt:
a. Verdichten der Biomasse bei einem Druck ≥ 150 MPa,
b. Pyrolysieren der verdichteten Biomasse bei einer Pyrolysetemperatur ≥ 280 °C
   und
c. Zerkleinern der pyrolysierten Biomasse zu Pulver.

Ad Verdichten: Ein Verdichten der Biomasse bei einem erfindungsgemäßen Druck ≥ 150 MPa ermöglicht, dass nach einer Pyrolyse die Biomasse eine ähnliche volumetrische Energiedichte aufweist, wie jene von pulverisierter Steinkohle. Zudem beeinflusst dieser Verfahrensschritt auch die Fließ-, Fluidisier- und Förderbarkeit günstig. Auch kann damit ein geringeres Lager- und Transportvolumen ermöglicht werden, als dies bei bekannter pyrolysierter Biomasse ohne vorangehender Verdichtung bekannt ist. Durch den vorgegebenen Druck ≥ 150 MPa bilden sich verschiedene Bindungsmechanismen aus, die zur Bildung von festen Partikeln führen. Neben formschlüssigen Verbindungen, etwa durch das Verhaken von Einzelpartikel, treten durch chemische und/oder physikalische Reaktionen Bindungen durch Adsorption und/oder durch Brückenbildungen auf. Zudem wird durch den gewählten Druck das in der Biomasse enthaltene Lignin plastisch, dringt so in die Poren der Biomasse ein und verklebt in weiterer Folge Einzelpartikel der Biomasse untereinander, wodurch nach Pyrolyse und Pulverisieren die geforderte Sphärizität der Pulverkörner erreicht werden kann. Des Weiteren führt diese Verdichtung zu einer Steigerung der Festigkeit des Produkts nach der Pyrolyse.

Ad. Pyrolyse: Durch ein Pyrolysieren der verdichteten Biomasse bei einer Pyrolysetemperatur ≥ 280 °C kann Einfluss auf die chemischen und physikalischen Eigenschaften des biologischen Reduktionsmittels genommen werden. Mithilfe der erfindungsgemäßen Pyrolyse wird einerseits die gravimetrische Energiedichte und damit der Heizwert erhöht und andererseits werden Sauerstoff, Wasser und organische Substanzen mit niedrigem Siedepunkt reduziert. Zudem kommt es durch diese erfindungsgemäße Pyrolyse zu den gewünschten Zersetzungsreaktionen der unterschiedlichen Biomassekomponenten (Karbonisierung), welche hauptsächlich aus Zellulose, Lignin und Hemizellulose bestehen. Dies vermeidet eine zu geringe Zersetzung der Biomassekomponenten und damit auch, dass die Körner selbst nach der Zerkleinerung faserartig sind. Durch die erfindungsgemäße Pyrolysetemperatur ≥ 280 °C in Kombination mit der vorhergehenden Verdichtung wird die ansonsten faserige Struktur der Biomasse zerstört, was die Ausbildung länglicher Körner beim nachfolgenden Verfahrensschritt der Zerkleinerung verhindert. Ein geeigneter Pyrolysereaktor ist beispielsweise ein Wirbelschicht-, Drehrohr- oder Schneckenreaktor. Weitere Reaktortypen sind denkbar.

Ad. Zerkleinerung: Nach der Pyrolyse erfolgt ein Zerkleinern der pyrolysierten Biomasse zu Pulver. Diverse Methoden zur Zerkleinerung sind vorstellbar, insbesondere jene Methoden, bei denen sich eine Kornform zu möglichst sphärischen Formen hin ergibt. Durch Verdichten, Pyrolyse und Zerkleinern werden stäbchenförmige Körner vermieden, die sowohl zu einem Verstopfen beim pneumatischen Fördern führen als auch ein Fluidisieren des Pulvers erschweren. Erfindungsgemäß zeigen die Pulverkörner der Biomasse nach dem Zerkleinern eine hohe Sphärizität, nämlich s_{50,3} > 0,7, insbesondere > 0,8, der Pulverkörner, gemessen mittels dynamischer Bildanalyse gemäß ISO 13322-2:2021. Hierzu kann ein QICPIC-Gerät der Firma SYMPATEC GmbH System-Partikel-Technik, Deutschland verwendet werden, welches Gerät auch unter "Sympatec-QICPIC" bekannt ist. Der Index "3" bei s_{50,3} spezifiziert, dass sich die Sphärizität s_{50,3} auf eine Volumenverteilung bezieht, entsprechend haben 50 Vol.-% des Partikelkollektivs eine höhere jeweilige Partikelsphärizität als der angegebene Wert.

Um diese Sphärizität zu erreichen, ist neben dem Zerkleinern zu Pulver eine Verdichtung (Umlagerung des Lignins) sowie die Pyrolyse (Zerstörung der Faserstruktur der Zellulose) notwendig.

Damit kann eine mit Steinkohle vergleichbare Förderbarkeit des biologischen Reduktionsmittels in Pulverform erreicht werden. Daher müssen im Gegensatz zu bekannten Biomassen in Pulverform keine weiteren Gegenmaßnahmen getroffen werden, um Störungen bei der Förderung zu vermeiden, wie z. B. höhere Fördergasmengen bei pneumatischer Förderung oder mechanische Austragshilfen bei den Fördergefäßen, was eines höheren Verfahrensaufwands bedarf oder bei bestehenden Anlagen nur durch Umbau oder Neubau möglich ist.

Vorzugsweise erfolgt das Verdichten bei einem Druck im Bereich von 150 bis 350 MPa und vorzugsweise bei einer Verweilzeit unter diesem Druck im Bereich von 3 bis 6 Sekunden. Damit können sich durch Umlagerung des Lignins jene vorstehend erwähnten Bindungsmechanismen verbessert ausbilden, was nach der Pyrolyse und dem Zerkleinern zu Pulver die geforderte Sphärizität weiter erhöhen kann. Beispielsweise kommt es bei dem erfindungsgemäßen Druck im Bereich von 150 bis 350 MPa bei einer Verweilzeit im Bereich von 3 bis 6 Sekunden auch zu einer Erwärmung durch Reibung auf 60 bis 135 °C, was das Verdichten weiter verbessern kann.

Vorstellbar ist, dass durch das Verdichten die Rohdichte der Biomasse auf 1000 bis 1300 kg/m³ erhöht wird. Als Verfahren zum Verdichten sind beispielsweise Pressverfahren, wie Pelletierung oder Brikettierung, denkbar.

Vorzugsweise wird das Pyrolysieren bei einer Pyrolysetemperatur im Bereich von 280 °C bis 600 °C, insbesondere von 300 °C bis 450 °C und/oder bei einer Verweilzeit bei der Pyrolysetemperatur im Bereich von 1 Minute bis 3 Stunden, insbesondere von 20 Minuten bis 3 Stunden, durchgeführt.

Durch die Beschränkung der Pyrolysetemperatur auf ≤ 600 °C kann beispielsweise eine Verringerung der feststoffbezogenen Ausbeute durch Masseverluste vermieden werden. Zudem kann vermieden werden, dass die pyrolysierte Biomasse derart spröde wird, dass sich dadurch bei einer nachfolgenden Zerkleinerung ein vergleichsweise hoher Feinanteil ausbildet, der sich nachteilig auf eine Fluidisierbarkeit und damit auf die pneumatische Förderbarkeit des Reduktionsmittels auswirken kann. Die erfindungsgemäßen Effekte können weiter verbessert werden, wenn das Pyrolysieren bei einer Pyrolysetemperatur im Bereich von 300 °C bis 450 °C durchgeführt wird. Vorteilhaft kann sein, wenn das Pyrolysieren bei einer Verweilzeit im Bereich von 1 Minute bis 3 Stunden, insbesondere von 20 Minuten bis 3 Stunden, durchgeführt wird.

Im Falle einer Verwendung eines Wirbelschichtreaktors für das Pyrolysieren kann beispielsweise eine Pyrolysetemperatur im Bereich von 300 bis 360 °C und eine Verweilzeit bei dieser Pyrolysetemperatur im Bereich von 1 bis 10 Minuten ausreichen, um ein Optimum an Ausbeute und Energiedichte einerseits und an Korngröße und Kornform andererseits zu erreichen.

In einer bevorzugten Ausführungsform kann beim Pyrolysieren die verdichtete Biomasse mit einer Aufheizrate im Bereich von 0,01 bis 2 K/s auf die Pyrolysetemperatur erwärmt werden, um das Verfahren weiter zu verbessern.

Vorzugsweise wird das Pyrolysieren im Wesentlichen unter Luftabschluss durchgeführt. Beispielsweise kann dieses Pyrolysieren ohne Zufuhr von Sauerstoff durchgeführt werden.

Beispielsweise erfolgt das Zerkleinern durch Mahlen. Ein geeignetes Zerkleinern ist beispielsweise das Mahlen der Biomasse mittels Prall- oder Walzenschüsselmühle. Zerkleinern durch die Prallmühle hat beispielsweise den Vorteil, dass eine Scherbeanspruchung auf die Biomasse gering ist. Vorstellbar ist, dass beim Mahlen oder nach dem Mahlen eine Sichtung stattfindet, um damit einen vergleichsweise hohen Anteil an Pulverkörnern mit einem Durchmesser < 10 µm zu vermeiden, was zu einem nachteiligen kohäsiven Verhalten des Reaktionsmittels führen könnte.

Vorzugsweise wird die Biomasse auf eine mittlere Korngröße x₅₀ im Bereich von 40 bis 90 µm zerkleinert, was die Förderbarkeit des Pulvers weiter verbessern kann.

Vorzugsweise wird die Biomasse vor dem Verdichten auf einen Wassergehalt im Bereich von 8 bis 20 % getrocknet. So kann der Wassergehalt verschiedener Biomassen vergleichsweise stark variieren, was beispielsweise von der Art der Biomasse, der Lagerdauer, äußeren Einflüssen und etwaiger Vornutzung abhängig sein kann. Eine Trocknung kann daher vorteilhaft sein, um den Wassergehalt der eingesetzten Biomassen zu homogenisieren. Der Wassergehalt kann bei frischer Biomasse vor der Trocknung bis zu 60 % betragen. Der Wassergehalt kann durch Trocknung der Biomasse im Trockenofen eingestellt werden. Hierzu kann die Biomasse oder eine Probe davon gewogen und dann die Biomasse in einem Ofen getrocknet werden, bis kein Massenverlust mehr auftritt. Danach wird die Biomasse oder eine Probe davon erneut gewogen und über den Gewichtsverlust der Wassergehalt festgestellt. Eine wirtschaftlich günstige Methode der Trocknung von Biomasse besteht beispielsweise in einer Trocknung von Biomasse in Form einer atmosphärischen Lufttrocknung.

Die Biomasse wird vorzugsweise vor dem Verdichten bei einer Trocknungstemperatur im Bereich von 40 bis 130 °C mittels eines Trocknungsverfahrens unter atmosphärischem Druck getrocknet. Eine Trocknung im Vakuum ist ebenfalls möglich. Zudem ist vorstellbar, dass die Biomasse vor dem Verdichten vorzerkleinert wird - beispielsweise auf mittlere Größe im Bereich von 4 bis 6 mm (Millimeter). Je nach Herkunft der Biomasse, oder bei einer bereits erfolgten Zerkleinerung zur Trocknung, können jedoch die geforderten Größenbereiche schon erfüllt sein, was die Zerkleinerung vermeidet. Beispielsweise müssen Biomassen aus der holzverarbeitenden Industrie in der Regel nicht zerkleinert werden. Die Zerkleinerung erfolgt vorzugsweise durch Zerhacken, Schreddern, Mahlen oder andere geeignete Verfahren zur Größenreduktion, um damit eine möglichst homogene Größenverteilung zu erreichen.

Vorzugsweise weist die für das Verdichten bereitgestellte Biomasse einen mittleren Ligningehalt von >10 Gewichtsprozent auf, um beispielsweise beim Verdichten die zur Bildung von festen Partikeln weiter verbessern zu können. Dies insbesondere, wenn die bereitgestellte Biomasse einen mittleren Ligningehalt von >13 % aufweist.

Je nach Ligningehalt der bereitgestellten Biomasse kann einer zusätzlichen Zugabe eines Bindemittels, bedürfen. Dies beispielsweise, wenn die bereitgestellte Biomasse einen mittleren Ligningehalt von ≤ 10 Gewichtsprozent aufweist.

Die Erfindung hat sich zudem die Aufgabe gestellt, ein Reduktionsmittel aus Biomasse zu schaffen, das standfest als Ersatz von Kohle in Anlagen eingesetzt werden kann. Zudem soll dieses Reduktionsmittel eine hohe gravimetrische und volumetrische Energiedichte aufweisen.

Die Erfindung löst die gestellte Aufgabe durch den Anspruch 13.

Ein durch das erfindungsgemäße Verfahren hergestelltes Reduktionsmittel in Pulverform kann zum Unterschied zu anderen aus Biomasse hergestellten Reduktionsmitteln, eine besondere Sphärizität aufweisen. So weisen erfindungsgemäß diese Pulverkörner eine Sphärizität s_{50,3} > 0,7, insbesondere > 0,8, auf, gemessen mittels dynamischer Bildanalyse gemäß ISO 13322-2:2021. Hierzu kann "Sympatec-QICPIC" verwendet werden.

Damit kann das Biomassepulver aus Biomasse einfach gefördert werden. Störungen an der Förderanlage sind damit verringert, wobei auch höhere Fördermengen möglich sind. Das erfindungsgemäße Reduktionsmittel aus Biomasse kann daher unproblematisch Kohle aus dem Bergbau ersetzen.

Vorzugsweise liegt der Heizwert des Reduktionsmittels aus Biomasse im Bereich von 20 bis 30 MJ/kg, gemessen gemäß DIN EN ISO 18125:2017-08.

Beispielsweise liegt der Kohlenstoffgehalt des Reduktionsmittels aus Biomasse im Bereich von 50 bis 85 Gewichtsprozent, gemessen gemäß DIN 51732:2014-07. Damit weist dieses Reduktionsmittel für eine Vielzahl an Reduktionsprozessen eine ausreichende Energiedichte auf.

Die Schüttdichte des Reduktionsmittels aus Biomasse kann > 450 kg/m³, gemessen gemäß DIN EN ISO 60:2000-01, betragen.

Vorstehendes kann weiter verbessert werden, wenn das Reduktionsmittel eine mittlere Korngröße x₅₀ im Bereich von 40 bis 90 µm, gemessen gemäß ISO 13320-1, aufweist. Hierzu kann ein HELOS-Gerät der Firma SYMPATEC GmbH System-Partikel-Technik, Deutschland verwendet werden, welches Gerät auch unter "Sympatec-HELOS" bekannt ist.

Das erfindungsgemäße Reduktionsmittel kann sich insbesondere bei der Stahlerzeugung, insbesondere als zumindest teilweiser Ersatz für Steinkohle, Kleinkoks, Stückkoks oder Koksgrus, eignen. Weitere Anwendungsfälle sind beispielsweise der Ersatz von Koksgrus bei der Sintererzeugung oder die Verwendung als Zuschlagstoff bei anderen metallurgischen Prozessen, wie etwa das Elektrolichtbogenschmelzverfahren.

Zum Nachweis der erzielten technischen Effekte wurde das Reduktionsmittel aus Biomasse mehrmals mit verschiedenen Verfahren hergestellt.

### Ausführungsbeispiel 1:

Holzartige Biomasse, nämlich Kurzumtriebsholz inklusive Rinde, wurde mithilfe eines Schredders oder Häckslers zu Hackschnitzel mit Korngrößen G30-G50 vorzerkleinert, auf einen Wassergehalt von 14 % getrocknet und mit einer Hammermühle zu Spänen verarbeitet. Hierbei lag die durchschnittliche Korngröße bei 4 - 6 mm.

Die so bereitgestellte Biomasse weist einen mittleren Ligningehalt von 23 % auf.

Diese bereitgestellte Biomasse wurden dann mittels einer Pelletpresse bei einem Druck von 320 MPa, einer Verweilzeit von 5 Sekunden und einer Temperatur von 90 bis 110 °C zu Pellets (Durchmesser 6 - 12 mm) verdichtet, und anschließend bis zur Aushärtung gekühlt. Damit erhöhte sich die Schüttdichte auf über 600 kg/m³ und die Rohdichte auf circa 1100 kg/m³.

Anschließend wurden die Pellets in einem Torrefizierungsreaktor (Drehrohrreaktor mit sauerstoffarmer Atmosphäre) pyrolysiert, indem diese auf 330 - 340 °C für 60 Minuten erhitzt und dabei entgast wurden. Anschließend erfolgte eine Abkühlung. Dadurch ergaben sich auch am fertigen Reduktionsmittel ein Kohlenstoffgehalt um die 65 bis 75 Gewichtsprozent und ein Heizwert um die 25 - 28 MJ/kg.

Die pyrolysierte Biomasse wurde daraufhin für die Anwendung als Reduktionsmittel von Eisenerz mittels einer Walzenschüsselmühle auf eine Korngröße von 95 Gewichtsprozent kleiner 300 µm und einem x₅₀ (entspricht dem Korngrößenwert, bei dem 50 Gewichtsprozent des Mahlgutes darunter bzw. darüber liegen) von 40 bis 90 µm pulverisiert (gemessen gemäß ISO 13320-1 mit Sympatec-HELOS).

Das fertige Reduktionsmittel in Pulverform wurde mit inertem Gas über die bestehende Anlagentechnik für Steinkohle in den Hochofen als Test eingeblasen.

An diesem Reduktionsmittel nach Ausführungsbeispiel 1 wurden folgende Kennwerte erfasst:
- Kohlenstoffgehalt = 73,1 % gemäß DIN 51732:2014-07,
- Heizwert = 25,78 MJ/kg, gemessen gemäß DIN EN ISO 18125:2017-08,
- Sphärizität von Sphärizität s_{50,3} = 0,85, gemessen mittels dynamischer Bildanalyse gemäß ISO 13322-2:2021 mit Sympatec-QICPIC,
- Schüttdichte = 500 kg/m³, gemessen gemäß DIN EN ISO 60:2000-01 und
- mittleren Korngröße x₅₀ = 42,4 µm, gemessen gemäß ISO 13320-1 mit Sympatec-HELOS.

### Ausführungsbeispiel 2:

Holzartige Biomasse wurde in eine Zerkleinerungsanlage befördert und auf die entsprechende Korngröße (wie im Beispiel 1) vorzerkleinert. Anschließend wurde der Wassergehalt auf circa 14 % eingestellt.

Die so bereitgestellte Biomasse weist einen mittleren Ligningehalt von 23 % auf.

Die Verdichtung wurde wie in Beispiel 1 beschrieben durchgeführt, wobei die Pellets zum Unterschied zu Beispiel 1 zerstückelt wurden. Diese Biomasse wurde in einem Wirbelschichtreaktor bei 330 - 340 °C für 6 Minuten pyrolysiert und mittels aktiver und direkter Luftkühlung anschließend gekühlt. Die Zerkleinerung und der Einsatz als Reduktionsmittel erfolgten, wie zu Ausführungsbeispiel 1 beschrieben.

An diesem Reduktionsmittel nach Ausführungsbeispiel 2 wurden folgende Kennwerte erfasst:
- Kohlenstoffgehalt = 72 % gemäß DIN 51732:2014-07,
- Heizwert = 25,4 MJ/kg, gemessen gemäß DIN EN ISO 18125:2017-08,
- Sphärizität von Sphärizität s_{50,3} = 0,83, gemessen mittels dynamischer Bildanalyse gemäß ISO 13322-2:2021 mit Sympatec QICPIC,
- Schüttdichte = 490 kg/m³, gemessen gemäß DIN EN ISO 60:2000-01 und
- mittleren Korngröße x₅₀ = 50 µm, gemessen gemäß ISO 13320-1 mit Sympatec-HELOS.

### Ausführungsbeispiel 3:

Für den Teilschritt der Verdichtung wurde anstelle einer Pelletpresse auf eine Vorrichtung zur Brikettierung zurückgegriffen. Die restlichen Prozessschritte erfolgten analog den Ausführungsbeispielen 1 und 2.

An diesem Reduktionsmittel nach Ausführungsbeispiel 3 wurden folgende Kennwerte erfasst:
- Kohlenstoffgehalt = 72,9 % gemäß DIN 51732:2014-07,
- Heizwert = 25,6 MJ/kg, gemessen gemäß DIN EN ISO 18125:2017-08,
- Sphärizität von Sphärizität s_{50,3} = 0,8, gemessen mittels dynamischer Bildanalyse gemäß ISO 13322-2:2021 mit Sympatec-QICPIC,
- Schüttdichte = 450 kg/m³, gemessen gemäß DIN EN ISO 60:2000-01 und
- mittleren Korngröße x₅₀ = 70 µm, gemessen gemäß ISO 13320-1 mit Sympatec-HELOS.

### Ausführungsbeispiel 4:

Zu Unterschied zu den Ausführungsbeispielen 1, 2 und 3 wurden der Biomasse auch zu Kurzumtriebsholz inklusive Rinde andere holzartige Edukte, wie Altholz, Sägereste und Waldschnitt zugesetzt. Die so bereitgestellte Biomasse wies einen mittleren Ligningehalt von 23 % auf.

An diesem Reduktionsmittel nach Ausführungsbeispiel 4 wurden folgende Kennwerte erfasst:
- Kohlenstoffgehalt = 74,6 % gemäß DIN 51732:2014-07,
- Heizwert = 26 MJ/kg, gemessen gemäß DIN EN ISO 18125:2017-08,
- Sphärizität von Sphärizität s_{50,3} = 0,82, gemessen mittels dynamischer Bildanalyse gemäß ISO 13322-2:2021 mit Sympatec-QICPIC,
- Schüttdichte = 490 kg/m³, gemessen gemäß DIN EN ISO 60:2000-01 und
- mittleren Korngröße x₅₀ = 60 µm, gemessen gemäß ISO 13320-1 mit Sympatec-HELOS.

Damit erfüllen alle Reduktionsmittel der vorgenannten Ausführungsbeispiele 1 bis 4 die Bedingungen mit
- einem Kohlenstoffgehalt von > 65 Gewichtsprozent, gemessen mit einem Elementaranalysator gemäß DIN 51732:2014-07,
- einem Heizwert von > 25 MJ/kg, gemessen gemäß DIN EN ISO 18125:2017-08,
- einer Sphärizität von Sphärizität s_{50,3} > 0,8, gemessen mittels dynamischer Bildanalyse gemäß ISO 13322-2:2021 mit Sympatec-QICPIC,
- einer Schüttdichte von > 450 kg/m³, gemessen gemäß DIN EN ISO 60:2000-01 und
- einer mittleren Korngröße x₅₀ im Bereich von 40 bis 90 µm, gemessen gemäß ISO 13320-1 mit Sympatec-HELOS.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zur Herstellung eines eine Pulverform aufweisenden Reduktionsmittels aus Biomasse, wobei die Pulverkörner des Reduktionsmittels eine Sphärizität s_{50,3} > 0,7, insbesondere > 0,8, gemessen mittels dynamischer Bildanalyse gemäß ISO 13322-2:2021, aufweisen, umfassend die folgenden Schritte in der genannten Reihenfolge:
Verdichten der Biomasse bei einem Druck ≥ 150 MPa,
Pyrolysieren der verdichteten Biomasse bei einer Pyrolysetemperatur ≥ 280 °C und
Zerkleinern der pyrolysierten Biomasse zu Pulver.

2. Verfahren nach Anspruch 1, **dadurch gekennzeichnet, dass** das Verdichten bei einem Druck im Bereich von 150 bis 350 MPa und vorzugsweise bei einer Verweilzeit unter diesem Druck im Bereich von 3 bis 6 Sekunden erfolgt.

3. Verfahren nach Anspruch 1 oder 2, **dadurch gekennzeichnet, dass** durch das Verdichten die Rohdichte der Biomasse auf 1000 bis 1300 kg/m³ erhöht wird.

4. Verfahren nach einem der vorhergehenden Ansprüche, **dadurch gekennzeichnet, dass** das Pyrolysieren bei einer Pyrolysetemperatur im Bereich von 280 °C bis 600 °C, insbesondere von 300 °C bis 450 °C, und/oder mit einer Verweilzeit bei der Pyrolysetemperatur im Bereich von 1 Minute bis 3 Stunden, insbesondere von 20 Minuten bis 3 Stunden, durchgeführt wird.

5. Verfahren nach einem der vorhergehenden Ansprüche, **dadurch gekennzeichnet, dass** das Pyrolysieren in einem Wirbelschichtreaktor bei einer Pyrolysetemperatur im Bereich von 300 bis 360 °C und mit einer Verweilzeit bei dieser Pyrolysetemperatur im Bereich von 1 bis 10 Minuten durchgeführt wird.

6. Verfahren nach einem der vorhergehenden Ansprüche, **dadurch gekennzeichnet, dass** beim Pyrolysieren die verdichtete Biomasse mit einer Aufheizrate im Bereich von 0,01 bis 2 K/s auf die Pyrolysetemperatur erwärmt wird.

7. Verfahren nach einem der vorhergehenden Ansprüche, **dadurch gekennzeichnet, dass** das Pyrolysieren im Wesentlichen unter Luftabschluss durchgeführt wird.

8. Verfahren nach einem der vorhergehenden Ansprüche, **dadurch gekennzeichnet, dass** das Zerkleinern durch Mahlen, insbesondere mittels Prall- oder Walzenschüsselmühle, erfolgt.

9. Verfahren nach einem der vorhergehenden Ansprüche, **dadurch gekennzeichnet, dass** durch das Zerkleinern die Biomasse auf eine mittlere Korngröße x₅₀ im Bereich von 40 bis 90 µm zerkleinert wird.

10. Verfahren nach einem der vorhergehenden Ansprüche, **dadurch gekennzeichnet, dass** die Biomasse vor dem Verdichten auf einen Wassergehalt im Bereich von 8 bis 20 % getrocknet wird.

11. Verfahren nach einem der vorhergehenden Ansprüche, **dadurch gekennzeichnet, dass** die Biomasse vor dem Verdichten bei einer Trocknungstemperatur im Bereich von 40 bis 130 °C getrocknet wird und/oder dass die Biomasse vor dem Verdichten vorzerkleinert, insbesondere auf mittlere Größe im Bereich von 4 bis 6 mm, wird.

12. Verfahren nach einem der vorhergehenden Ansprüche, **dadurch gekennzeichnet, dass** die für das Verdichten bereitgestellte Biomasse einen mittleren Ligningehalt von > 10 Gewichtsprozent, insbesondere > 13 Gewichtsprozent, aufweist.

13. Reduktionsmittel in Pulverform, dessen Pulverkörner eine Sphärizität s_{50,3} > 0,7, insbesondere > 0,8, gemessen mittels dynamischer Bildanalyse gemäß ISO 13322-2:2021, aufweisen, hergestellt aus Biomasse nach dem Verfahren nach einem der Ansprüche 1 bis 12.

14. Reduktionsmittel nach Anspruch 13, **dadurch gekennzeichnet, dass** der Heizwert des Reduktionsmittels im Bereich von 20 bis 30 MJ/kg, gemessen gemäß DIN EN ISO 18125:2017-08, liegt.

15. Reduktionsmittel nach einem der Ansprüche 13 bis 14, **dadurch gekennzeichnet, dass** der Kohlenstoffgehalt des Reduktionsmittels im Bereich von 50 bis 85 Gewichtsprozent, gemessen gemäß DIN 51732:2014-07, liegt.

16. Reduktionsmittel nach einem der Ansprüche 13 bis 15, **dadurch gekennzeichnet, dass** die Schüttdichte > 450 kg/m³, gemessen gemäß DIN EN ISO 60:2000-01, beträgt.

17. Reduktionsmittel nach einem der Ansprüche 13 bis 16, **dadurch gekennzeichnet, dass** das Reduktionsmittel eine mittlere Korngröße X50 im Bereich von 40 bis 90 µm, gemessen gemäß ISO 13320-1, aufweist.

18. Verwendung eines Reduktionsmittels nach einem der Ansprüche 13 bis 17 bei der Stahlerzeugung, insbesondere als zumindest teilweisen Ersatz für Steinkohle, Kleinkoks, Stückkoks oder Koksgrus.
